# EUROPEAN PATENT APPLICATION

(11) **EP 4 451 145 A1**
(43) Date of publication of application: **23.10.2024**
(21) Application number: 22906572.7
(22) Date of filing: 13.12.2022
(51) Int. Cl.: G06F 17/10, G06N 20/00, G06F 9/50

(54) **CLIENT SCREENING METHOD AND APPARATUS, CLIENT, AND CENTRAL DEVICE**

(30) Priority: 15.12.2021 CN 202111537989
(71) Applicant: VIVO MOBILE COMMUNICATION CO., LTD., Dongguan, Guangdong 523863 (CN)
(72) Inventor: SUN, Bule, Dongguan, Guangdong 523863 (CN); SUN, Peng, Dongguan, Guangdong 523863 (CN); YANG, Ang, Dongguan, Guangdong 523863 (CN)
(74) Representative: Lavoix
(86) International application number: PCT/CN2022/138755
(87) International publication number: WO 2023/109827

(57) **Abstract**

A client screening method and apparatus, a client, and a central device are provided, relating to the field of communication technologies. The client screening method includes: sending, by a central device, a first instruction to a client, to indicate the client to participate in model training of specific federated learning or federated meta learning (101); and receiving, by the central device, a training result reported by the client, where the training result is a result or an intermediate result after the client performs a round of model training (102).

## Description

### CROSS-REFERENCE TO RELATED APPLICATIONS

This application claims priority to Chinese Patent Application No. 202111537989.6, filed in China on December 15, 2021, the entire content of which is incorporated herein by reference.

### TECHNICAL FIELD

This application relates to the field of communication technologies, and specifically, to a client screening method and apparatus, a client, and a central device.

### BACKGROUND

At present, artificial intelligence (Artificial Intelligence, AI) has been widely applied in various fields. An AI module has various implementations, such as a neural network, a decision tree, a support vector machine, a Bayesian classifier, and the like.

When the AI is applied to a wireless communication system, a corresponding neural network needs to be run on a terminal. However, an AI model of the terminal is generally obtained through offline training by a network side, and then distributed to the terminal for execution. This is because a data volume of a single terminal is limited, making it difficult to train a good model. After receiving a model, the terminal generally performs fine-tuning based on a small volume of data first, so that better performance can be achieved. Federated learning or federated meta learning may perform training on a premise without exposing terminal data, which is a very promising direction. In the federated learning or the federated meta learning, the terminal updates a parameter or a loss of a local model using its own data, and then the terminal aggregates the parameter or the loss to a server for processing to obtain a global model. The server then distributes the global model to the terminal for a new round of training. An objective of the federated learning is to obtain a model that may converge to all terminals that participate in the training, and an objective of the federated meta learning is to obtain a model initialization parameter that may quickly converge in a new scenario based on terminal data that participates in the training. The federated meta learning may achieve better performance than the federated learning when a volume of fine-tuning data at the terminal is small or a requirement for convergence time (or a number of iterations) of fine-tuning is high. In the related art, all candidate clients participate in model training of specific federated learning or federated meta learning, resulting in a slow convergence speed of the model training and high overheads of communication resources between a central device and a client.

### SUMMARY

Embodiments of this application provide a client screening method and apparatus, a client, and a central device, which can improve a convergence speed of model training.

According to a first aspect, a client screening method is provided, including:
sending, by a central device, a first instruction to a client, to indicate the client to participate in model training of specific federated learning or federated meta learning; and
receiving, by the central device, a training result reported by the client, where the training result is a result or an intermediate result after the client performs a round of model training.

According to a second aspect, a client screening apparatus is provided, including:
a sending module, configured to send a first instruction to a client, to indicate the client to participate in model training of specific federated learning or federated meta learning; and
a receiving module, configured to receive a training result reported by the client, where the training result is a result or an intermediate result after the client performs a round of model training.

According to a third aspect, a client screening method is provided, including:
receiving, by a client, a first instruction from a central device, where the first instruction is used for indicating the client to participate in model training of specific federated learning or federated meta learning; and
performing, by the client, the model training of the specific federated learning or federated meta learning, and reporting a training result to the central device, where the training result is a result or an intermediate result after the client performs a round of model training.

According to a fourth aspect, a client screening apparatus is provided, including:
a receiving module, configured to receive a first instruction from a central device, where the first instruction is used for indicating a client to participate in model training of specific federated learning or federated meta learning; and
a reporting module, configured to perform the model training of the specific federated learning or federated meta learning and report a training result to the central device, where the training result is a result or an intermediate result after the client performs a round of model training.

According to a fifth aspect, a central device is provided. The central device includes a processor and a memory, where the memory stores a program or an instruction that is executable on the processor, and when executed by the processor, the program or the instruction implements the steps of the method according to the first aspect.

According to a sixth aspect, a central device is provided, including a processor and a communication interface, where the communication interface is configured to: send a first instruction to a client, to indicate the client to participate in model training of specific federated learning or federated meta learning; and receive a training result reported by the client, where the training result is a result or an intermediate result after the client performs a round of model training.

According to a seventh aspect, a client is provided. The client includes a processor and a memory, where the memory stores a program or an instruction that is executable on the processor, and when the program or the instruction is executed by the processor, the steps of the method according to the third aspect are implemented.

According to an eighth aspect, a client is provided, including a processor and a communication interface, where the communication interface is configured to receive a first instruction from a central device, where the first instruction is used for indicating the client to participate in model training of specific federated learning or federated meta learning; and the processor is configured to perform the model training of the specific federated learning or federated meta learning, and report a training result to the central device, where the training result is a result or an intermediate result after the client performs a round of model training.

According to a ninth aspect, a client screening system is provided, including a central device and a client, where the central device may be configured to perform the steps of the client screening method according to the first aspect, and the client may be configured to perform the steps of the client screening method according to the third aspect.

According to a tenth aspect, a readable storage medium is provided, storing a program or an instruction, where when the program or the instruction is executed by a processor, the steps of the method according to the first aspect are implemented, or the steps of the method according to the third aspect are implemented.

According to an eleventh aspect, a chip is provided, including a processor and a communication interface, where the communication interface is coupled to the processor, and the processor is configured to execute a program or an instruction to implement the method according to the first aspect or implement the method according to the third aspect.

According to a twelfth aspect, a computer program/program product is provided, where the computer program/program product is stored in a storage medium, and the computer program/program product is executed by at least one processor to implement the steps of the client screening method according to the first aspect or implement the steps of the client screening method according to the third aspect.

In the embodiments of this application, the central device does not require all candidate clients to participate in the model training of the specific federated learning or federated meta learning. Instead, the central device first screens the candidate clients, determines a client that needs to perform the model training, then sends the first instruction to the client, to indicate the client to participate in the model training of the specific federated learning or the federated meta learning, and receives the training result reported by the client. In this way, some candidate clients with a poor condition may be eliminated, thereby improving a convergence speed of the training, and reducing overheads of communication resources between the central device and the client.

### BRIEF DESCRIPTION OF THE DRAWINGS

FIG. 1 is a block diagram of a wireless communication system to which an embodiment of this application is applicable;
FIG. 2 is a schematic diagram of channel state information feedback;
FIG. 3 is a schematic diagram of performance when AI performs training for different iterations;
FIG. 4 is a schematic flowchart of a client screening method on a central device side according to an embodiment of this application;
FIG. 5 is a schematic flowchart of a client screening method on a client side according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network side device according to an embodiment of this application.

### DETAILED DESCRIPTION

The following clearly describes technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

Terms "first" and "second" in the specification and claims of this application are used to distinguish between similar objects, but are not used to describe a specific sequence or order. It should be understood that terms used in such a way are interchangeable in proper circumstances, so that the embodiments of this application can be implemented in other sequences than the sequence illustrated or described herein. In addition, the objects distinguished by "first" and "second" are usually of the same category, and a number of the objects is not limited. For example, there may be one or more first objects. In addition, "and/or" in this specification and the claims represents at least one of connected objects, and the character "/" generally indicates an "or" relationship between associated objects.

It should be noted that a technology described in the embodiments of this application is not limited to a long term evolution (Long Term Evolution, LTE)/LTE-advanced (LTE-Advanced, LTE-A) system, and may further be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. Terms "system" and "network" in the embodiments of this application may usually be used interchangeably. The described technology may be applied to the foregoing mentioned systems and radio technologies, and may also be applied to other systems and radio technologies. The following describes a new radio (New Radio, NR) system for an exemplary purpose, and NR terms are used in most of the descriptions below. These technologies may also be applied to an application other than an NR system application, such as a 6th generation (6th Generation, 6G) communication system.

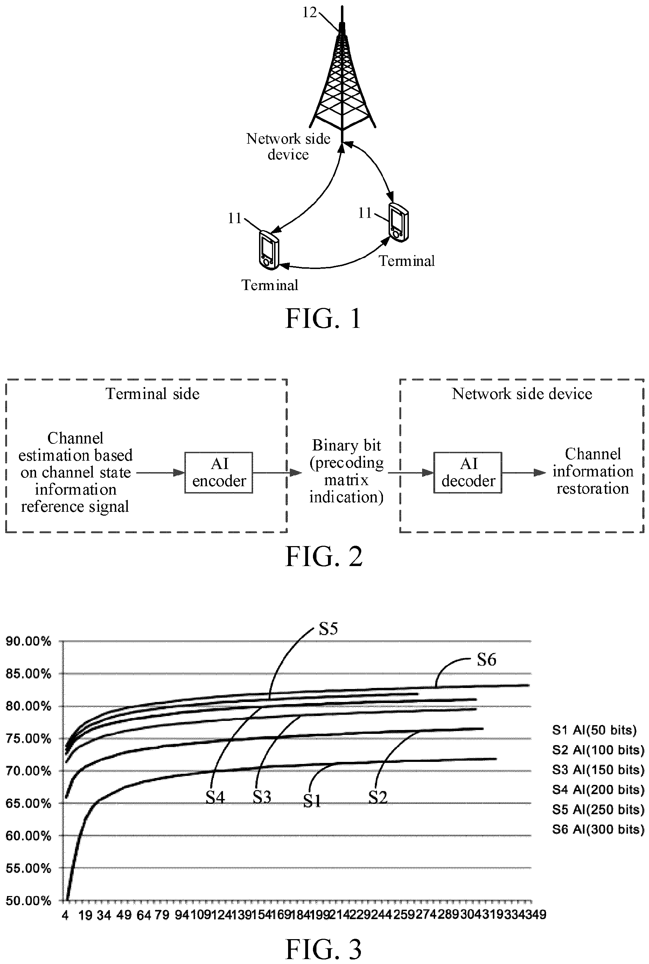

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), or a smart home (home devices with a wireless communication function, such as a refrigerator, a television, a washing machine, a furniture, or the like). The wearable device includes a smart watch, a smart band, a smart headset, smart glasses, a smart jewelry (a smart bangle, a smart bracelet, a smart ring, a smart necklace, a smart anklet, or a smart anklet bracelet), a smart wristlet, a smart clothes, or the like. It should be noted that a specific type of the terminal 11 is not limited in the embodiments of this application. The network side device 12 may be an access network device or a core network device, where the access network device 12 may also be referred to as a radio access network device, a radio access network (Radio Access Network, RAN), a radio access network function, a radio access network unit, or the like. The access network device 12 may include a base station, a WLAN access point, a WiFi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting and receiving point (Transmitting Receiving Point, TRP), or another appropriate term in the field, and provided that the same technical effect can be achieved, the base station is not limited to a specific technical term. It should be noted that, a base station in an NR system is only used as an example in the embodiments of this application, and a specific type of the base station is not limited.

A main method to improve performance of a 5th generation (5th Generation, 5G) network through AI is to enhance or replace an existing algorithm or processing module through a neural network-based algorithm and model. In a specific scenario, the neural network-based algorithm and model may achieve better performance than a deterministic algorithm. Commonly used neural networks include a deep neural network, a convolutional neural network, a recurrent neural network, and the like. With the help of existing AI tools, construction, training, and validation of the neural networks may be implemented.

Replacing modules in an existing system through an AI method can effectively improve system performance. Channel state information (Channel State Information, CSI) feedback shown in FIG. 2 may significantly improve corresponding system performance with same overheads by replacing conventional CSI calculation with an AI encoder (encoder) and an AI decoder (decoder). Through an AI-based solution, spectral efficiency of a system may be improved by about 30%.

Performance when AI performs training for different iterations is shown in FIG. 3, where a horizontal coordinate represents a training period, and a vertical coordinate represents a square of correlation. Different iterations require different training data, and it can be seen that a large number of training iterations are required to achieve performance convergence.

Selecting a representative terminal for federated training may not only improve training efficiency, but also enhance generalization performance of a model. Due to different training purposes of federated learning and federated meta learning, terminal screening solutions corresponding to the two training methods should also be different.

The following describes in detail a client screening method provided in the embodiments of this application with reference to the accompanying drawings and through some embodiments and application scenarios thereof.

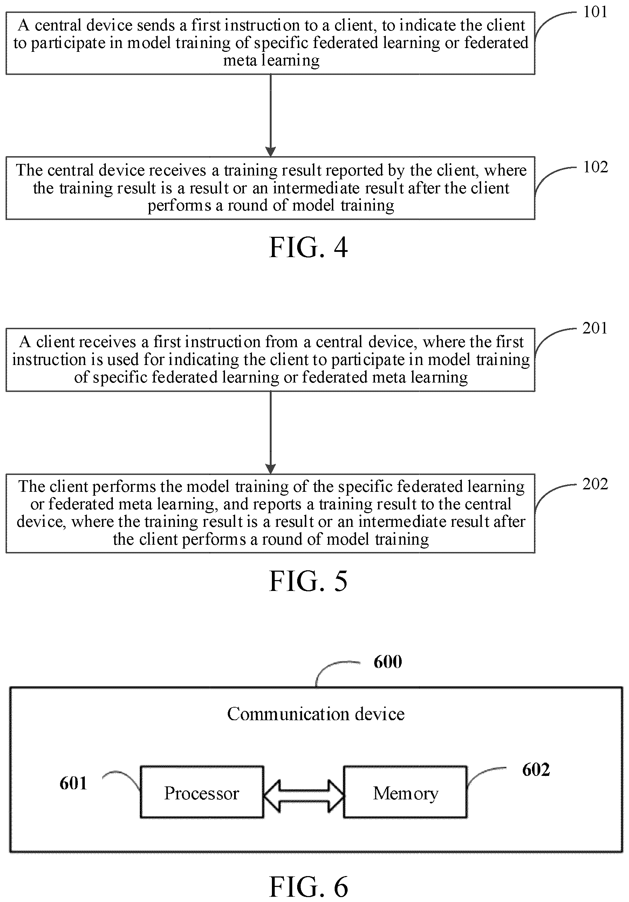

An embodiment of this application provides a client screening method, as shown in FIG. 4, including:
Step 101. A central device sends a first instruction to a client, to indicate the client to participate in model training of specific federated learning or federated meta learning.
Step 102. The central device receives a training result reported by the client, where the training result is a result or an intermediate result after the client performs a round of model training.

The training result is a result or an intermediate result obtained after the client participating in the federated learning or the federated meta learning performs a round of training. The training result or the intermediate result may be a gradient result, a loss function result, a performance result for a specific task, an encryption result of the foregoing result, or the like.

In the embodiments of this application, the central device does not require all candidate clients to participate in the model training of the specific federated learning or federated meta learning. Instead, the central device first screens the candidate clients, determines a client that needs to perform the model training, then sends the first instruction to the client, to indicate the client to participate in the model training of the specific federated learning or the federated meta learning, and receives the training result reported by the client. In this way, some candidate clients with a poor condition may be eliminated, thereby improving a convergence speed of the training, and reducing overheads of communication resources between the central device and the client. In addition, by selecting a representative client for federated training may not only improve training efficiency, but also improve generalization performance of a model.

In some embodiments, that the central device sends the first instruction to the client includes:
screening, by the central device, N clients from M candidate clients according to a preset first screening condition, and unicasting the first instruction to the N clients, where M and N are positive integers, and N is less than or equal to M; or
broadcasting, by the central device, the first instruction to M candidate clients, where the first indication carries a second screening condition, the second screening condition is used for screening a client that reports the training result, and the client meets the second screening condition.

In this embodiment, clients within a communication range of the central device are candidate clients. The client that reports the training result is selected from the candidate clients. All the candidate clients may be used as clients, or some candidate clients may be screened as clients. Broadcasting is to send the first instruction to all the candidate clients, while unicasting is only to send the first instruction to the client that is screened. Each candidate client that receives the unicasted first instruction needs to perform model training and report a training result. Each candidate client that receives the broadcasted first instruction needs to determine whether itself meets the second screening condition, and only a candidate client that meets the second screening condition performs model training and reports a training result.

In some embodiments, the central device sends the first instruction to the client through at least one of the following:
a media access control (Media Access Control, MAC) control element (Control Element, CE);
a radio resource control (Radio Resource Control, RRC) message;
a non-access stratum (Non-access stratum, NAS) message;
a management and orchestration message;
user plane data;
downlink control information;
a system information block (System Information Block, SIB);
layer 1 signaling of a physical downlink control channel (Physical Downlink Control Channel, PDCCH);
information of a physical downlink shared channel (Physical Downlink Shared Channel, PDSCH);
MSG (Message, MSG) 2 information of a physical random access channel (Physical Random Access Channel, PRACH);
MSG 4 information of the physical random access channel PRACH;
MSG B information of the physical random access channel PRACH;
information or signaling of a broadcast channel;
signaling of an Xn interface (an interface);
signaling of a PC5 interface (an interface);
information or signaling of a physical sidelink control channel (Physical Sidelink Control Channel, PSCCH);
information of a physical sidelink shared channel (Physical Sidelink Shared Channel, PSSCH);
information of a physical sidelink broadcast channel (Physical Sidelink Broadcast Channel, PSBCH);
information of a physical sidelink discovery channel (Physical Sidelink Discovery Channel, PSDCH); and
information of a physical sidelink feedback channel (Physical Sidelink Feedback Channel, PSFCH).

In some embodiments, before the central device sends the first instruction to the client, the method further includes:
receiving, by the central device, first training data and/or a first parameter reported by each candidate client, where the first parameter may be a determining parameter of the first screening condition.

In this embodiment, each candidate client may first report a small volume of training data (that is, the first training data) and/or the first parameter. The central device determines a client that participates in training according to the small volume of training data and/or the first parameter, screens the client that participates in the model training and reports the training result, to avoid all clients from participating in the training.

In some embodiments, the central device only receives the first training data reported by each candidate client, and determines the first parameter based on the first training data. The central device may speculate, perceive, detect, or infer the first parameter based on the first training data. The central device may screen the candidate clients based on the first parameter to determine the client.

In some embodiments, the first parameter includes at least one of the following:
a data type of the candidate client;
a data distribution parameter of the candidate client;
a service type of the candidate client, for example, enhanced mobile broadband (Enhanced Mobile Broadband, eMBB), ultra-reliable low-latency communications (Ultra-Reliable Low-Latency Communications, URLLC), massive machine type communication (Massive Machine Type Communication, mMTC), and other 6G new scenarios;
a working scenario of the candidate client, including but not limited to: a high-speed, a low-speed, a line of sight (Line of Sight, LOS), a non-line of sight (Non-Line of Sight, NLOS), a high signal-to-noise ratio, or a low signal-to-noise ratio working scenario;
a communication network access manner of the candidate client, including a mobile network, WiFi, and a fixed network, where the mobile network includes 2th generation (2th Generation, 2G), 3th generation (3th Generation, 3G), 4th generation (4th Generation, 4G), 5G and 6G;
channel quality of the candidate client;
difficulty in collecting data of the candidate client;
a battery level state of the candidate client, for example, a specific value of an available remaining battery level, or a hierarchical description result such as charging or not charging, and the like;
a storage state of the candidate client, for example, a specific value of an available memory, or a hierarchical result;
computing power of the candidate client, for example, a number of graphics processing units (Graphics Processing Unit, GPU), a number of central processing units (Central Processing Unit, CPU), a number of cores, and the like, where the computing power may be expressed by using floating-point operations per second (Floating Point Operations Per Second, FLOPS) or a processor computing unit capability (tera operations per second (Tera Operations Per Second, TOPS), giga operations per second (Giga Operations Per Second, GOPS), and/or million operation per second (Million Operation Per Second (MOPS)), and the like;
a number of times that the candidate client participates in the model training of the specific federated learning or federated meta learning; and
willingness of the candidate client for participating in the model training of the specific federated learning or federated meta learning.

In this embodiment, each candidate client may first report a small volume of the training data (that is, the first training data) and/or the first parameter to the central device, where the first parameter may be the determining parameter of the first screening condition. The central device determines a client that needs to participates in the model training and reports the training result according to the first screening condition and/or the second screening condition, where the client is selected from the candidate clients. Specifically, there may be M candidate clients, and N clients that need to be trained for client screening and reporting are determined from the M candidate clients, where N may be less than M or equal to M.

In a specific embodiment, the client that needs to participate in the model training and report the training result may be determined according to the data type of each candidate client, and the candidate clients are grouped according to the data type of each candidate client. Data types of candidate clients in each group are the same or similar. When screening is performed on the clients, K1 candidate clients are selected from each group of candidate clients as clients that need to participate in the model training and report the training result, where K1 is a positive integer. In this way, the diversity of the clients participating in the training may be ensured and it may be ensured that each group of candidate clients have clients participating in the model training, so that generalization performance is better, and each group of clients are taken into account.

In a specific embodiment, the client that needs to participate in the model training and report the training result may be determined according to the service type of each candidate client, and the candidate clients are grouped according to the service type of each candidate client. Service types of candidate clients in each group are the same or similar. When screening is performed on the clients, K2 candidate clients are selected from each group of candidate clients as clients that need to participate in the model training and report the training result, where K2 is a positive integer. In this way, the diversity of the clients participating in the training may be ensured and it may be ensured that each group of candidate clients have clients participating in the model training, so that generalization performance is better, and each group of clients are taken into account.

In a specific embodiment, the client that needs to participate in the model training and report the training result may be determined according to the data distribution parameter of each candidate client, and the candidate clients are grouped according to the data distribution parameter of each candidate client. Data distribution parameters of candidate clients in each group are the same or similar. When screening is performed on the clients, K3 candidate clients are selected from each group of candidate clients as clients that need to participate in the model training and report the training result, where K3 is a positive integer. In this way, the diversity of the clients participating in the training may be ensured and it may be ensured that each group of candidate clients have clients participating in the model training, so that generalization performance is better, and each group of clients are taken into account.

In a specific embodiment, the client that needs to participate in the model training and report the training result may be determined according to the working scenario of each candidate client, and the candidate clients are grouped according to the working scenario of each candidate client. Working scenarios of candidate clients in each group are the same or similar. When screening is performed on the clients, A candidate clients are selected from each group of candidate clients as clients that need to participate in the model training and report the training result, where A is a positive integer. In this way, the diversity of the clients that participates in the training may be ensured and it may be ensured that each group of candidate clients have clients participating in the model training, so that generalization performance is better, and each group of clients are taken into account.

In a specific embodiment, the client that needs to participate in the model training and report the training result may be determined according to the difficulty in collecting data of each candidate client. The candidate clients are prioritized according to the difficulty in collecting data of each candidate client. A candidate client with lower difficulty in collecting data has a higher screened priority. D candidate clients are selected from the candidate clients in descending order of priorities as clients that need to participate in the model training and report the training result, where D is a positive integer. In this way, the difficulty in collecting data may be reduced.

In a specific embodiment, the client that needs to participate in the model training and report the training result may be determined according to the willingness of each candidate client for participating in the model training of the specific federated learning or the federated meta learning. The candidate clients are prioritized according to the willingness thereof. A candidate client with higher willingness has a higher screened priority. G candidate clients are selected from the candidate clients in descending order of priorities as clients that need to participate in the model training and report the training result, where G is a positive integer. In this way, it may be ensured that a candidate client with higher willingness participates in the model training.

In a specific embodiment, the client that needs to participate in the model training and report the training result may be determined according to the number of times that each candidate client participates in the model training of the specific federated learning or the federated meta learning. The candidate clients are prioritized according to the number of times that each candidate client participates in the model training. A candidate client with a fewer number of times of participating the model training has a higher screened priority. K4 candidate clients are selected from the candidate clients in descending order of priorities as clients that need to participate in the model training and report the training result, where K4 is a positive integer. In this way, the number of times that each candidate client participates in the model training may be balanced.

In a specific embodiment, the client that needs to participate in the model training and report the training result may be determined according to the communication network access manner of each candidate client. The candidate clients are prioritized according to the communication network access manner of each candidate client. The communication network access manner includes a fixed network, WiFi, and a mobile network, and the mobile network includes 2G, 3G, 4G, 5G, 6G, and the like. A screened priority of the fixed network is higher than or equal to a screened priority of the WiFi, and the screened priority of the WiFi is higher than or equal to a screened priority of the mobile network. A higher generation in the mobile network indicates a higher screened priority. For example, a screened priority of a 5G candidate client is higher than or equal to a screened priority of a 4G candidate client. B candidate clients are selected from the candidate clients in descending order of priorities as clients that need to participate in the model training and report the training result, where B is a positive integer.

In a specific embodiment, the client that needs to participate in the model training and report the training result may be determined according to the channel quality of each candidate client. The candidate clients are prioritized according to the channel quality of each candidate client. A candidate client with higher channel quality has a higher screened priority. C candidate clients are selected from the candidate clients in descending order of priorities as clients that need to participate in the model training and report the training result, where C is a positive integer. In this way, it may be ensured that a client with good channel quality participates in the model training and reports the training result, and model training quality is ensured.

In a specific embodiment, the client that needs to participate in the model training and report the training result may be determined according to the battery level state of each candidate client. The candidate clients are prioritized according to the battery level state of each candidate client. A candidate client with a higher battery level has a higher screened priority. Besides, a candidate client in a charging state has a highest screened priority. E candidate clients are selected from the candidate clients in descending order of priorities as clients that need to participate in the model training and report the training result, where E is a positive integer. In this way, it may be ensured that the clients that participate in the model training and report the training result have sufficient power.

In a specific embodiment, the client that needs to participate in the model training and report the training result may be determined according to the storage state of each candidate client. The candidate clients are prioritized according to the storage state of each candidate client. A candidate client with larger available storage space has a higher screened priority. F candidate clients are selected from the candidate clients in descending order of priorities as clients that need to participate in the model training and report the training result, where F is a positive integer. In this way, it may be ensured that the clients that participate in the model training and report the training result have sufficient available storage space to store the training data and the training result.

In a specific embodiment, the client that needs to participate in the model training and report the training result may be determined according to the computing power of each candidate client. The candidate clients are prioritized according to the computing power of each candidate client. A candidate client with higher computing power has a higher screened priority. P candidate clients are selected from the candidate clients in descending order of priorities as clients that need to participate in the model training and report the training result, where P is a positive integer. In this way, it may be ensured that the clients that participate in the model training and report the training result have sufficient computing power for training.

In some embodiments, the unicasted first instruction includes at least one of the following:
a structure of a model;
a model initialization parameter;
an output physical quantity of the model;
an input physical quantity of the model;
a reference point corresponding to the model;
a hyperparameter of the model; and
communication information.

The foregoing model refers to a model of the specific federated learning or federated meta learning.

In some embodiments, the broadcasted first instruction includes at least one of the following:
an identifier of each candidate client that participates in training;
an identifier of each candidate client that does not participate in training;
a first screening condition;
a model file;
a structure of a model;
a model initialization parameter;
an output physical quantity of the model;
an input physical quantity of the model;
a reference point corresponding to the model;
a hyperparameter of the model; and
communication information.

The foregoing model refers to a model of the specific federated learning or federated meta learning.

The identifier of each candidate client that performs client screening and the identifier of each candidate client that does not perform client screening constitute the second screening condition. The candidate client may determine whether itself meets the second screening condition according to its own identifier.

In some embodiments, after the central device receives the training result reported by the client, the method further includes:
sending, by the central device in a case of determining that a model reaches convergence according to the training result, a converged model and a hyperparameter to L inference clients, where L is greater than M, equal to M, or less than M.

In this embodiment, the central device determines whether the model converges based on the received training result. In a case that the model does not converge, the central device repeats the process of screening the client, sending the first instruction to the client, and receiving the training result reported by the client; and in a case that the model converges, the central device sends the converged model and the hyperparameter to the L inference clients. The inference client may be selected from the candidate clients, or another client other than the candidate clients.

In this embodiment, client screening needs to be performed once after at least one round of training. In all rounds of training, at least in a round of client screening, the client is triggered to report the first training data and/or the first parameter. When the model reaches convergence after a plurality of rounds of training (including a plurality of times of client screening), the central device distributes the converged model and the hyperparameter to the inference client, and the inference client performs performance verification and inference on the model.

In some embodiments, the central device sends the converged model and the hyperparameter to the inference client through at least one of the following:
a media access control MAC control element CE;
a radio resource control RRC message;
a non-access stratum NAS message;
a management and orchestration message;
user plane data;
downlink control information;
a system information block SIB;
layer 1 signaling of a physical downlink control channel PDCCH;
information of a physical downlink shared channel PDSCH;
MSG 2 information of the physical random access channel PRACH;
MSG 4 information of the physical random access channel PRACH;
MSG B information of the physical random access channel PRACH;
information or signaling of a broadcast channel;
signaling of an Xn interface;
signaling of a PC 5 interface;
information or signaling of a physical sidelink control channel PSCCH;
information of a physical sidelink shared channel PSSCH;
information of a physical sidelink broadcast channel PSBCH;
information of a physical sidelink discovery channel PSDCH; and
information of a physical sidelink feedback channel PSFCH.

In some embodiments, the model is a federated meta learning model, and the hyperparameter is determined by the first parameter.

In some embodiments, the hyperparameter includes at least one of the following:

a learning rate, an external iteration learning rate, an internal iteration learning rate, a meta learning rate, a number of iterations, a number of internal iterations, a number of external iterations, a data volume required for training, a size of a batch (batch), a size of a mini batch (mini batch), a regularization parameter, a number of layers of a neural network, a number of neurons in each hidden layer, a number of learning epochs (epoch), selection of a cost function, and a neuron activation function.

Compared to the conventional federated learning, the federated meta learning obtains an initialization parameter with best generalization performance through multi-task training, and may implement quick convergence by using this initialization parameter in a new task. Training of the federated meta learning has some special content: a training process is divided into an internal iteration and an external iteration. Therefore, the hyperparameter notified to the client by the central device includes a hyperparameter that is not involved in the federated learning, for example, the external iteration learning rate, the internal iteration learning rate, the meta learning rate, the number of internal iterations, and the number of external iterations.

The federated meta learning has a greater requirement for client screening, because an advantage of the federated meta learning lies in better generalization performance. Therefore, all data is treated as fairly as possible when the data is used for participating in training.

For the federated meta learning, a part of hyperparameters distributed to different clients may be different. The part of hyperparameters of each client may be determined according to a first parameter corresponding to each client (mainly according to the difficulty in collecting data, the battery level state of each client, the storage state of each client, and the like in the first parameter). Specific principle includes at least one of the following:
for a client with high difficulty in collecting data, it is recommended to use fewer internal iterations and a larger internal iteration step, and for a client with low difficulty in collecting data, it is recommended to use more internal iterations and a smaller internal iteration step;
for a client with a low battery level, it is recommended to use fewer internal iterations and a larger internal iteration step, and for a client with a high battery level, it is recommended to use more internal iterations and a smaller internal iteration step;
for a client with less available storage space, it is recommended to use fewer internal iterations and a larger internal iteration step, and for a client with more available storage space, it is recommended to use more internal iterations and a smaller internal iteration step;
in a case that there are a large number of clients with high difficulty in collecting data, it is recommended to use fewer external iterations and a larger external iteration learning rate; and in a case that there are a small number of clients with high difficulty in collecting data, it is recommended to use more external iterations and a smaller external iteration learning rate;
in a case that there are a large number of clients with a low battery level, it is recommended to use fewer external iterations and a larger external iteration learning rate; and in a case that there is a small number of clients with a low battery level, it is recommended to use more external iterations and a smaller external iteration learning rate; and
in a case that there are a large number of clients with less available storage space, it is recommended to use fewer external iterations and a larger external iteration learning rate; and in a case that there are a small number of clients with less available storage space, it is recommended to use more external iterations and a smaller external iteration learning rate.

In this embodiment, the central device is a network side device or a terminal; and the client is a network side device or a terminal. For example, this embodiment may involve a scenario where a plurality of network side devices collaborate to perform the federated learning or the federated meta learning, and a scenario where a plurality of terminals collaborate to perform the federated learning or the federated meta learning. Information exchange (including the first parameter, the first instruction, and the like) between the central device and the client may be completed through one communication or a plurality of communication.

In addition, the candidate client may be a network side device or a terminal; and the inference client may be a network side device or a terminal.

An embodiment of this application further provides a client screening method, as shown in FIG. 5, including:
Step 201. A client receives a first instruction from a central device, where the first instruction is used for indicating the client to participate in model training of specific federated learning or federated meta learning.
Step 202. The client performs the model training of the specific federated learning or federated meta learning, and reports a training result to the central device, where the training result is a result or an intermediate result after the client performs a round of model training.

The training result is a result or an intermediate result obtained after the client participating in the federated learning or the federated meta learning performs a round of training. The training result or the intermediate result may be a gradient result, a loss function result, a performance result for a specific task, an encryption result of the foregoing result, or the like.

In the embodiments of this application, the central device does not require all candidate clients to participate in the model training of the specific federated learning or federated meta learning. Instead, the central device first screens the candidate clients, determines a client that needs to perform the model training, then sends the first instruction to the client, to indicate the client to participate in the model training of the specific federated learning or the federated meta learning, and receives the training result reported by the client. In this way, some candidate clients with a poor condition may be eliminated, thereby improving a convergence speed of the training, and reducing overheads of communication resources between the central device and the client. In addition, by selecting a representative client for federated training may not only improve training efficiency, but also improve generalization performance of a model.

In some embodiments, the client reports the training result to the central device through at least one of the following:
a media access control MAC control element CE;
a radio resource control RRC message;
a non-access stratum NAS message;
layer 1 signaling of a physical uplink control channel PUCCH;
MSG 1 information of the physical random access channel PRACH;
MSG 3 information of the physical random access channel PRACH;
MSG A information of the physical random access channel PRACH;
information of a physical uplink shared channel PUSCH;
signaling of an Xn interface;
signaling of a PC5 interface;
a physical sidelink control channel PSCCH;
a physical sidelink shared channel PSSCH;
a physical sidelink broadcast channel PSBCH;
a physical sidelink discovery channel PSDCH; and
a physical sidelink feedback channel PSFCH.

In some embodiments, that the client receives the first instruction from the central device includes:
receiving, by the client, the first instruction unicasted by the central device, where the client is a client screened by the central device from candidate clients according to a preset first screening condition; or
receiving, by the client, the first instruction broadcasted by the central device, where the first instruction carries a second screening condition, the second screening condition is used for screening a client that reports the training result, and the client meets the second screening condition.

In some embodiments, that the client performs the model training of the specific federated learning or federated meta learning, and reports the training result to the central device includes:
performing, by the client, the model training and reporting the training result if the client receives the first instruction unicasted by the central device; or
performing, by the client, the model training and reporting the training result if the client receives the first instruction broadcasted by the central device.

In this embodiment, clients within a communication range of the central device are candidate clients. The client that reports the training result is selected from the candidate clients. All the candidate clients may be used as clients, or some candidate clients may be screened as clients. Broadcasting is to send the first instruction to all the candidate clients, while unicasting is only to send the first instruction to the client that is screened. Each candidate client that receives the unicasted first instruction needs to perform model training and report a training result. Each candidate client that receives the broadcasted first instruction needs to determine whether itself meets the second screening condition, and only a candidate client that meets the second screening condition performs model training and reports a training result.

In some embodiments, before the client receives the first instruction from the central device, the method further includes:
reporting, by each candidate client, first training data and/or a first parameter to the central device, where the first parameter may be a determining parameter of the first screening condition, and the first training data is used for determining the first parameter.

In this embodiment, each candidate client may first report a small volume of training data (that is, the first training data) and/or the first parameter. The central device determines a client that participates in training according to the small volume of training data and/or the first parameter, screens the client that participates in the model training and reports the training result, to avoid all clients from participating in the training.

In some embodiments, the client reports the first training data and/or the first parameter to the central device through at least one of the following:
a media access control MAC control element CE;
a radio resource control RRC message;
a non-access stratum NAS message;
layer 1 signaling of a physical uplink control channel PUCCH;
MSG 1 information of the physical random access channel PRACH;
MSG 3 information of the physical random access channel PRACH;
MSG A information of the physical random access channel PRACH;
information of a physical uplink shared channel PUSCH;
signaling of an Xn interface;
signaling of a PC 5 interface;
a physical sidelink control channel PSCCH;
a physical sidelink shared channel PSSCH;
a physical sidelink broadcast channel PSBCH;
a physical sidelink discovery channel PSDCH; and
a physical sidelink feedback channel PSFCH.

In some embodiments, each candidate client only sends the first training data to the central device, and the first training data is used for determining the first parameter.

In some embodiments, the first parameter includes at least one of the following:
a data type of the candidate client;
a data distribution parameter of the candidate client;
a service type of the candidate client, for example, enhanced mobile broadband (eMBB), ultra-reliable low-latency communications (URLLC), massive machine type communication (mMTC), and other 6G new scenarios;
a working scenario of the candidate client, including but not limited to: a high-speed, a low-speed, a line of sight LOS, a non-line of sight NLOS, a high signal-to-noise ratio, or a low signal-to-noise ratio working scenario;
a communication network access manner of the candidate client, including a mobile network, WiFi, and a fixed network, where the mobile network includes 2G, 3G, 4G, 5G, and 6G;
channel quality of the candidate client;
difficulty in collecting data of the candidate client;
a battery level state of the candidate client, for example, a specific value of an available remaining battery level, or a hierarchical description result such as charging or not charging, and the like;
a storage state of the candidate client, for example, a specific value of an available memory, or a hierarchical result;
computing power of the candidate client, for example, a number of GPUs, a number of CPUs, a number of cores, and the like, where the computing power may be expressed by using floating-point operations per second FLOPS, a processor computing unit capability (TOPS, GOPS, and/or MOPS), and the like;
a number of times that the candidate client participates in the model training of the specific federated learning or federated meta learning; and
willingness of the candidate client for participating in the model training of the specific federated learning or federated meta learning.

In this embodiment, each candidate client may first report a small volume of the training data (that is, the first training data) and/or the first parameter to the central device, where the first parameter may be the determining parameter of the first screening condition. The central device determines a client that needs to participates in the model training and reports the training result according to the first screening condition and/or the second screening condition, where the client is selected from the candidate clients. Specifically, there may be M candidate clients, and N clients that need to be trained for client screening and reporting are determined from the M candidate clients, where N may be less than M or equal to M.

In a specific embodiment, the client that needs to participate in the model training and report the training result may be determined according to the data type of each candidate client, and the candidate clients are grouped according to the data type of each candidate client. Data types of candidate clients in each group are the same or similar. When screening is performed on the clients, K1 candidate clients are selected from each group of candidate clients as clients that need to participate in the model training and report the training result, where K1 is a positive integer. In this way, the diversity of the clients participating in the training may be ensured and it may be ensured that each group of candidate clients have clients participating in the model training, so that generalization performance is better, and each group of clients are taken into account.

In a specific embodiment, the client that needs to participate in the model training and report the training result may be determined according to the service type of each candidate client, and the candidate clients are grouped according to the service type of each candidate client. Service types of candidate clients in each group are the same or similar. When screening is performed on the clients, K2 candidate clients are selected from each group of candidate clients as clients that need to participate in the model training and report the training result, where K2 is a positive integer. In this way, the diversity of the clients participating in the training may be ensured and it may be ensured that each group of candidate clients have clients participating in the model training, so that generalization performance is better, and each group of clients are taken into account.

In a specific embodiment, the client that needs to participate in the model training and report the training result may be determined according to the data distribution parameter of each candidate client, and the candidate clients are grouped according to the data distribution parameter of each candidate client. Data distribution parameters of candidate clients in each group are the same or similar. When screening is performed on the clients, K3 candidate clients are selected from each group of candidate clients as clients that need to participate in the model training and report the training result, where K3 is a positive integer. In this way, the diversity of the clients participating in the training may be ensured and it may be ensured that each group of candidate clients have clients participating in the model training, so that generalization performance is better, and each group of clients are taken into account.

In a specific embodiment, the client that needs to participate in the model training and report the training result may be determined according to the working scenario of each candidate client, and the candidate clients are grouped according to the working scenario of each candidate client. Working scenarios of candidate clients in each group are the same or similar. When screening is performed on the clients, A candidate clients are selected from each group of candidate clients as clients that need to participate in the model training and report the training result, where A is a positive integer. In this way, the diversity of the clients that participates in the training may be ensured and it may be ensured that each group of candidate clients have clients participating in the model training, so that generalization performance is better, and each group of clients are taken into account.

In a specific embodiment, the client that needs to participate in the model training and report the training result may be determined according to the difficulty in collecting data of each candidate client. The candidate clients are prioritized according to the difficulty in collecting data of each candidate client. A candidate client with lower difficulty in collecting data has a higher screened priority. D candidate clients are selected from the candidate clients in descending order of priorities as clients that need to participate in the model training and report the training result, where D is a positive integer. In this way, the difficulty in collecting data may be reduced.

In a specific embodiment, the client that needs to participate in the model training and report the training result may be determined according to the willingness of each candidate client for participating in the model training of the specific federated learning or the federated meta learning. The candidate clients are prioritized according to the willingness thereof. A candidate client with higher willingness has a higher screened priority. G candidate clients are selected from the candidate clients in descending order of priorities as clients that need to participate in the model training and report the training result, where G is a positive integer. In this way, it may be ensured that a candidate client with higher willingness participates in the model training.

In a specific embodiment, the client that needs to participate in the model training and report the training result may be determined according to the number of times that each candidate client participates in the model training of the specific federated learning or the federated meta learning. The candidate clients are prioritized according to the number of times that each candidate client participates in the model training. A candidate client with a fewer number of times of participating the model training has a higher screened priority. K4 candidate clients are selected from the candidate clients in descending order of priorities as clients that need to participate in the model training and report the training result, where K4 is a positive integer. In this way, the number of times that each candidate client participates in the model training may be balanced.

In a specific embodiment, the client that needs to participate in the model training and report the training result may be determined according to the communication network access manner of each candidate client. The candidate clients are prioritized according to the communication network access manner of each candidate client. The communication network access manner includes a fixed network, WiFi, and a mobile network, and the mobile network includes 2G, 3G, 4G, 5G, 6G, and the like. A screened priority of the fixed network is higher than or equal to a screened priority of the WiFi, and the screened priority of the WiFi is higher than or equal to a screened priority of the mobile network. A higher generation in the mobile network indicates a higher screened priority. For example, a screened priority of a 5G candidate client is higher than or equal to a screened priority of a 4G candidate client. B candidate clients are selected from the candidate clients in descending order of priorities as clients that need to participate in the model training and report the training result, where B is a positive integer.

In a specific embodiment, the client that needs to participate in the model training and report the training result may be determined according to the channel quality of each candidate client. The candidate clients are prioritized according to the channel quality of each candidate client. A candidate client with higher channel quality has a higher screened priority. C candidate clients are selected from the candidate clients in descending order of priorities as clients that need to participate in the model training and report the training result, where C is a positive integer. In this way, it may be ensured that a client with good channel quality participates in the model training and reports the training result, and model training quality is ensured.

In a specific embodiment, the client that needs to participate in the model training and report the training result may be determined according to the battery level state of each candidate client. The candidate clients are prioritized according to the battery level state of each candidate client. A candidate client with a higher battery level has a higher screened priority. Besides, a candidate client in a charging state has a highest screened priority. E candidate clients are selected from the candidate clients in descending order of priorities as clients that need to participate in the model training and report the training result, where E is a positive integer. In this way, it may be ensured that the clients that participate in the model training and report the training result have sufficient power.

In a specific embodiment, the client that needs to participate in the model training and report the training result may be determined according to the storage state of each candidate client. The candidate clients are prioritized according to the storage state of each candidate client. A candidate client with larger available storage space has a higher screened priority. F candidate clients are selected from the candidate clients in descending order of priorities as clients that need to participate in the model training and report the training result, where F is a positive integer. In this way, it may be ensured that the clients that participate in the model training and report the training result have sufficient available storage space to store the training data and the training result.

In a specific embodiment, the client that needs to participate in the model training and report the training result may be determined according to the computing power of each candidate client. The candidate clients are prioritized according to the computing power of each candidate client. A candidate client with higher computing power has a higher screened priority. P candidate clients are selected from the candidate clients in descending order of priorities as clients that need to participate in the model training and report the training result, where P is a positive integer. In this way, it may be ensured that the clients that participate in the model training and report the training result have sufficient computing power for training.

In some embodiments, the unicasted first instruction includes at least one of the following:
a model file;
a structure of a model;
a model initialization parameter;
an output physical quantity of the model;
an input physical quantity of the model;
a reference point corresponding to the model;
a hyperparameter of the model; and
communication information.

The foregoing model refers to a model of the specific federated learning or federated meta learning.

In some embodiments, the broadcasted first instruction includes at least one of the following:
an identifier of each candidate client that participates in training;
an identifier of each candidate client that does not participate in training;
the first screening condition;
a model file;
a structure of a model; a model initialization parameter;
an output physical quantity of the model;
an input physical quantity of the model;
a reference point corresponding to the model;
a hyperparameter of the model; and
communication information.

The foregoing model refers to a model of the specific federated learning or federated meta learning.

The identifier of each candidate client that performs client screening and the identifier of each candidate client that does not perform client screening constitute the second screening condition. The candidate client may determine whether itself meets the second screening condition according to its own identifier.

In some embodiments, after the training result is reported to the central device, the method further includes:
receiving, by an inference client, a converged model and a hyperparameter sent by the central device.

In this embodiment, the central device determines whether the model converges based on the received training result. In a case that the model does not converge, the central device repeats the process of screening the client, sending the first instruction to the client, and receiving the training result reported by the client; and in a case that the model converges, the central device sends the converged model and the hyperparameter to the L inference clients. The inference client may be selected from the candidate clients, or another client other than the candidate clients.

In this embodiment, client screening needs to be performed once after at least one round of training. In all rounds of training, at least in a round of client screening, the client is triggered to report the first training data and/or the first parameter. When the model reaches convergence after a plurality of rounds of training (including a plurality of times of client screening), the central device distributes the converged model and the hyperparameter to the inference client, and the inference client performs performance verification and inference on the model.

In some embodiments, the model is a federated meta learning model, and the hyperparameter is determined by the first parameter.

In some embodiments, the hyperparameter includes at least one of the following:
a learning rate, an external iteration learning rate, an internal iteration learning rate, a meta learning rate, a number of iterations, a number of internal iterations, a number of external iterations, a data volume required for training, a size of a batch, a size of a mini batch, a regularization parameter, a number of layers of a neural network, a number of neurons in each hidden layer, a number of learning epochs, selection of a cost function, and a neuron activation function.

Compared to the conventional federated learning, the federated meta learning obtains an initialization parameter with best generalization performance through multi-task training, and may implement quick convergence by using this initialization parameter in a new task. Training of the federated meta learning has some special content: a training process is divided into an internal iteration and an external iteration. Therefore, the hyperparameter notified to the client by the central device includes a hyperparameter that is not involved in the federated learning, for example, the external iteration learning rate, the internal iteration learning rate, the meta learning rate, the number of internal iterations, and the number of external iterations.

The federated meta learning has a greater requirement for client screening, because an advantage of the federated meta learning lies in better generalization performance. Therefore, all data is treated as fairly as possible when the data is used for participating in training.

For the federated meta learning, a part of hyperparameters distributed to different clients may be different. The part of hyperparameters of each client may be determined according to a first parameter corresponding to each client (mainly according to the difficulty in collecting data, the battery level state of each client, the storage state of each client, and the like in the first parameter). Specific principle includes at least one of the following:
for a client with high difficulty in collecting data, it is recommended to use fewer internal iterations and a larger internal iteration step, and for a client with low difficulty in collecting data, it is recommended to use more internal iterations and a smaller internal iteration step;
for a client with a low battery level, it is recommended to use fewer internal iterations and a larger internal iteration step, and for a client with a high battery level, it is recommended to use more internal iterations and a smaller internal iteration step;
for a client with less available storage space, it is recommended to use fewer internal iterations and a larger internal iteration step, and for a client with more available storage space, it is recommended to use more internal iterations and a smaller internal iteration step;
in a case that there are a large number of clients with high difficulty in collecting data, it is recommended to use fewer external iterations and a larger external iteration learning rate; and in a case that there are a small number of clients with high difficulty in collecting data, it is recommended to use more external iterations and a smaller external iteration learning rate;
in a case that there are a large number of clients with a low battery level, it is recommended to use fewer external iterations and a larger external iteration learning rate; and in a case that there is a small number of clients with a low battery level, it is recommended to use more external iterations and a smaller external iteration learning rate; and
in a case that there are a large number of clients with less available storage space, it is recommended to use fewer external iterations and a larger external iteration learning rate; and in a case that there are a small number of clients with less available storage space, it is recommended to use more external iterations and a smaller external iteration learning rate.

In some embodiments, after the inference client receives the converged model and the hyperparameter sent by the central device, the method further includes:
performing, by the inference client, performance verification on the model; and
using, by the inference client, the model for inference if a performance verification result meets a preset first condition.

The first condition may be configured or pre-configured by the central device or agreed upon a protocol. After the inference client performs performance verification on the model, the inference client may also report a result of whether to perform inference to the central device.

In some embodiments, the model on which performance verification is performed is a model distributed by the central device, or a fine-tuned model of the model distributed by the central device.

In this embodiment, the inference client may directly perform performance verification by using the model distributed by the central device, or the inference client may perform performance verification after performing fine-tuning (fine-tuning) on the model distributed by the central device. For fine-tuning of meta learning, a special hyperparameter related to meta learning corresponding to each inference client may be different. The special hyperparameter related to meta learning of each inference client may be determined according to a first parameter corresponding to each inference client (mainly according to the difficulty in collecting data, the battery level state, the storage state, and the like in the first parameter).

In this embodiment, the central device is a network side device or a terminal; and the client is a network side device or a terminal. For example, this embodiment may involve a scenario where a plurality of network side devices collaborate to perform the federated learning or the federated meta learning, and a scenario where a plurality of terminals collaborate to perform the federated learning or the federated meta learning. Information exchange (including the first parameter, the first instruction, and the like) between the central device and the client may be completed through one communication or a plurality of communication.

In addition, the candidate client may be a network side device or a terminal; and the inference client may be a network side device or a terminal.

In the foregoing embodiments, the model may be a channel estimation model, a mobility prediction model, or the like. The technical solutions in the embodiments of this application may be applied to a 6G network, and may also be applied to 5G and 5.5G networks.

The client screening method provided in the embodiments of this application may be executed by a client screening apparatus. The client screening apparatus provided in the embodiments of this application is described by using an example in which the client screening method is executed by a client screening apparatus in the embodiments of this application.

An embodiment of this application provides a client screening apparatus, including:
a sending module, configured to send a first instruction to a client, to indicate the client to participate in model training of specific federated learning or federated meta learning; and
a receiving module, configured to receive a training result reported by the client, where the training result is a result or an intermediate result after the client performs a round of model training.

In the embodiments of this application, the central device does not require all candidate clients to participate in the model training of the specific federated learning or federated meta learning. Instead, the central device first screens the candidate clients, determines a client that needs to perform the model training, then sends the first instruction to the client, to indicate the client to participate in the model training of the specific federated learning or the federated meta learning, and receives the training result reported by the client. In this way, some candidate clients with a poor condition may be eliminated, thereby improving a convergence speed of the training, and reducing overheads of communication resources between the central device and the client. In addition, by selecting a representative client for federated training may not only improve training efficiency, but also improve generalization performance of a model.

In some embodiments, the sending module is specifically configured to: screen N clients from M candidate clients according to a preset first screening condition, and unicast the first instruction to the N clients, where M and N are positive integers, and N is less than or equal to M; or
broadcast the first instruction to M candidate clients, where the first instruction carries a second screening condition, the second screening condition is used for screening a client that reports the training result, and the client meets the second screening condition.

In some embodiments, the receiving module is further configured to receive first training data and/or a first parameter reported by each candidate client, where the first parameter may be a determining parameter of the first screening condition.

In some embodiments, the receiving module is configured to only receive the first training data reported by each candidate client, and determine the first parameter based on the first training data.

In some embodiments, the first parameter includes at least one of the following:
a data type of the candidate client;
a data distribution parameter of the candidate client;
a service type of the candidate client, for example, enhanced mobile broadband (eMBB), ultra-reliable low-latency communications (URLLC), massive machine type communication (mMTC), and other 6G new scenarios;
a working scenario of the candidate client, including but not limited to: a high-speed, a low-speed, a line of sight LOS, a non-line of sight NLOS, a high signal-to-noise ratio, or a low signal-to-noise ratio working scenario;
a communication network access manner of the candidate client, including a mobile network, WiFi, and a fixed network, where the mobile network includes 2G, 3G, 4G, 5G, and 6G;
channel quality of the candidate client;
difficulty in collecting data of the candidate client;
a battery level state of the candidate client, for example, a specific value of an available remaining battery level, or a hierarchical description result such as charging or not charging, and the like;
a storage state of the candidate client, for example, a specific value of an available memory, or a hierarchical result;
computing power of the candidate client, for example, a number of GPUs (graphics processing unit), a number of CPUs (central processing unit), a number of cores, and the like, where the computing power may be expressed by using floating-point operations per second FLOPS, a processor computing unit capability (TOPS, GOPS, and/or MOPS), and the like;
a number of times that the candidate client participates in the model training of the specific federated learning or federated meta learning; and
willingness of the candidate client for participating in the model training of the specific federated learning or federated meta learning.

In some embodiments, the unicasted first instruction includes at least one of the following:
a model file;
a structure of a model;
a model initialization parameter;
an output physical quantity of the model;
an input physical quantity of the model;
a reference point corresponding to the model;
a hyperparameter of the model; and
communication information.

In some embodiments, the broadcasted first instruction includes at least one of the following:
an identifier of each candidate client that participates in training;
an identifier of each candidate client that does not participate in training;
the first screening condition;
a model file;
a structure of a model;
a model initialization parameter;
an output physical quantity of the model;
an input physical quantity of the model;
a reference point corresponding to the model;
a hyperparameter of the model; and
communication information.

In some embodiments, the sending module is further configured to send, in a case of determining that a model reaches convergence according to the training result, a converged model and a hyperparameter to L inference clients, where L is greater than M, equal to M, or less than M.

In some embodiments, the model is a federated meta learning model, and the hyperparameter is determined by the first parameter.

In some embodiments, the hyperparameter includes at least one of the following:

a learning rate, an external iteration learning rate, an internal iteration learning rate, a meta learning rate, a number of iterations, a number of internal iterations, a number of external iterations, a data volume required for training, a size of a batch, a size of a mini batch, a regularization parameter, a number of layers of a neural network, a number of neurons in each hidden layer, a number of learning epochs, selection of a cost function, and a neuron activation function.

In some embodiments, the central device is a network side device or a terminal; and
the client is a network side device or a terminal.

In addition, the candidate client may be a network side device or a terminal; and the inference client may be a network side device or a terminal.

An embodiment of this application provides a client screening apparatus, including:
a receiving module, configured to receive a first instruction from a central device, where the first instruction is used for indicating a client to participate in model training of specific federated learning or federated meta learning; and
a reporting module, configured to perform the model training of the specific federated learning or federated meta learning and report a training result to the central device, where the training result is a result or an intermediate result after the client performs a round of model training.

In some embodiments, the receiving module is configured to: receive the first instruction unicasted by the central device, where the client is a client screened by the central device from candidate clients according to a preset first screening condition; or
receive the first instruction broadcasted by the central device, where the first instruction carries a second screening condition, the second screening condition is used for screening a client that reports the training result, and the client meets the second screening condition.

In some embodiments, the reporting module is configured to: perform the model training and report the training result if the client receives the first instruction unicasted by the central device; or
perform the model training and report the training result if the client receives the first instruction broadcasted by the central device.

In some embodiments, the reporting module is further configured to report first training data and/or a first parameter to the central device, where the first parameter may be a determining parameter of the first screening condition, and the first training data is used for determining the first parameter.

In some embodiments, the first parameter includes at least one of the following:
a data type of the candidate client;
a data distribution parameter of the candidate client;
a service type of the candidate client, for example, enhanced mobile broadband (eMBB), ultra-reliable low-latency communications (URLLC), massive machine type communication (mMTC), and other 6G new scenarios;
a working scenario of the candidate client, including but not limited to: a high-speed, a low-speed, a line of sight LOS, a non-line of sight NLOS, a high signal-to-noise ratio, or a low signal-to-noise ratio working scenario;
a communication network access manner of the candidate client, including a mobile network, WiFi, and a fixed network, where the mobile network includes 2G, 3G, 4G, 5G, and 6G;
channel quality of the candidate client;
difficulty in collecting data of the candidate client;
a battery level state of the candidate client, for example, a specific value of an available remaining battery level, or a hierarchical description result such as charging or not charging, and the like;
a storage state of the candidate client, for example, a specific value of an available memory, or a hierarchical result;
computing power of the candidate client, for example, a number of GPUs, a number of CPUs, a number of cores, and the like, where the computing power may be expressed by using floating-point operations per second FLOPS, a processor computing unit capability (TOPS, GOPS, and/or MOPS), and the like;
a number of times that the candidate client participates in the model training of the specific federated learning or federated meta learning; and
willingness of the candidate client for participating in the model training of the specific federated learning or federated meta learning.

In some embodiments, the unicasted first instruction includes at least one of the following:
a model file;
a structure of a model;
a model initialization parameter;
an output physical quantity of the model;
an input physical quantity of the model;
a reference point corresponding to the model;
a hyperparameter of the model; and
communication information.

In some embodiments, the broadcasted first instruction includes at least one of the following:
an identifier of each candidate client that participates in training;
an identifier of each candidate client that does not participate in training;
the first screening condition;
a model file;
a structure of a model; a model initialization parameter;
an output physical quantity of the model;
an input physical quantity of the model;
a reference point corresponding to the model;
a hyperparameter of the model; and
communication information.

In some embodiments, the receiving module is further configured to receive a converged model and a hyperparameter sent by the central device.

In some embodiments, the model is a federated meta learning model, and the hyperparameter is determined by the first parameter.

In some embodiments, the hyperparameter includes at least one of the following:
a learning rate, an external iteration learning rate, an internal iteration learning rate, a meta learning rate, a number of iterations, a number of internal iterations, a number of external iterations, a data volume required for training, a size of a batch, a size of a mini batch, a regularization parameter, a number of layers of a neural network, a number of neurons in each hidden layer, a number of learning epochs, selection of a cost function, and a neuron activation function.

In some embodiments, a first part of the hyperparameter is determined by a first parameter corresponding to the inference client, and the first part includes at least one of the following:
an external iteration learning rate, an internal iteration learning rate, a meta learning rate, a number of internal iterations, and a number of external iterations.

In some embodiments, the apparatus further includes:
a processing module, configured to perform performance verification on the model; and use the model for inference if a performance verification result meets a preset first condition.

In some embodiments, the model on which performance verification is performed is a model distributed by the central device, or a fine-tuned model of the model distributed by the central device.

In some embodiments, the central device is a network side device or a terminal; and
the client is a network side device or a terminal.

In addition, the candidate client may be a network side device or a terminal; and the inference client may be a network side device or a terminal.

The client screening apparatus in the embodiments of this application may be an electronic device, for example, an electronic device with an operating system, or a component in the electronic device, for example, an integrated circuit or a chip. The electronic device may be a terminal, or another device other than the terminal. For example, the terminal may include but is not limited to the types of terminals 11 listed above, and the another device may be a server, a network attached storage (Network Attached Storage, NAS), and the like, which is not specifically limited in the embodiments of this application.

The client screening apparatus provided in the embodiments of this application can implement each process implemented in the method embodiments in FIG. 4 and FIG. 5, and achieve the same technical effect. To avoid repetition, details are not described herein again.

Optionally, as shown in FIG. 6, an embodiment of this application further provides a communication device 600, including a processor 601 and a memory 602. The memory 602 stores a program or an instruction that is executable on the processor 601. For example, when the communication device 600 is a central device, the steps of the client screening method embodiment are implemented when the program or the instruction is executed by the processor 601, and the same technical effect can be achieved. When the communication device 600 is a client, the steps of the client screening method embodiment are implemented when the program or the instruction is executed by the processor 601, and the same technical effect can be achieved. To avoid repetition, details are not described herein again.

An embodiment of this application further provides a central device. The central device includes a processor and a memory. The memory stores a program or an instruction that is executable on the processor. When the program or the instruction is executed by the processor, the steps of the foregoing client screening method are implemented.

An embodiment of this application further provides a central device, including a processor and a communication interface, where the communication interface is configured to: send a first instruction to a client, to indicate the client to participate in model training of specific federated learning or federated meta learning; and receive a training result reported by the client, where the training result is a result or an intermediate result after the client performs a round of model training.

An embodiment of this application further provides a client. The client includes a processor and a memory, where the memory stores a program or an instruction that is executable on the processor. When the program or the instruction is executed by the processor, the steps of the foregoing client screening method are implemented.

An embodiment of this application further provides a client is further provided, including a processor and a communication interface, where the communication interface is configured to receive a first instruction from a central device, where the first instruction is used for indicating the client to participate in model training of specific federated learning or federated meta learning; and the processor is configured to perform the model training of the specific federated learning or federated meta learning, and report a training result to the central device, where the training result is a result or an intermediate result after the client performs a round of model training.

The central device may be a network side device or a terminal, and the client may be a network side device or a terminal.

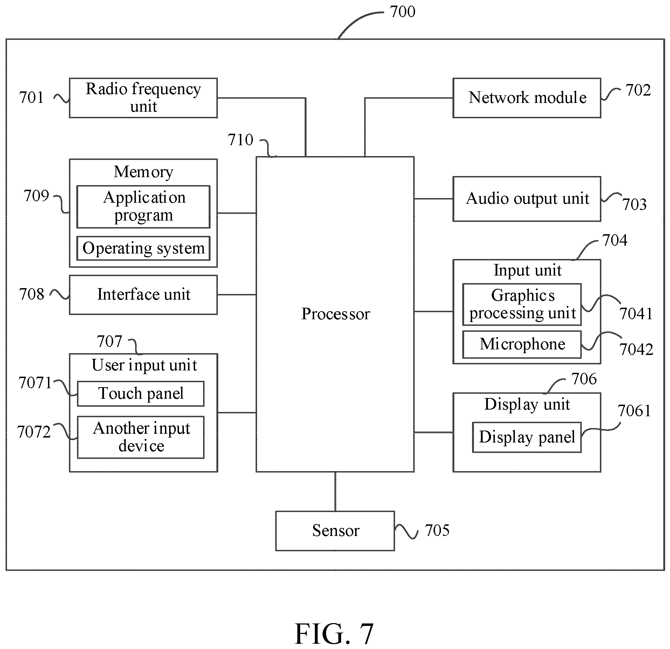

In a case that the central device and/or the client are/is a terminal, an embodiment of this application further provides a terminal, including a processor and a communication interface. The terminal embodiment corresponds to the foregoing method embodiment on a terminal side. The implementation processes and implementations of the foregoing method embodiment may be applied to the terminal embodiment, and the same technical effect can be achieved. Specifically, FIG. 7 is a schematic diagram of a hardware structure of a terminal according to an embodiment of this application.

The terminal 700 includes but is not limited to at least some components of a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) for supplying power to each component. The power supply may be logically connected to the processor 710 through a power management system, thereby implementing functions such as charging, discharging, and power consumption management through the power management system. The terminal structure shown in FIG. 7 does not constitute a limitation on the terminal, and the terminal may include more or fewer components than those shown in the figure, or combine some components, or use a different component deployment. Details are not described herein again.

It should be understood that, in the embodiments of this application, the input unit 704 may include a graphics processing unit (Graphics Processing Unit, GPU) 7041 and a microphone 7042. The graphics processing unit 7041 processes image data of a static picture or a video that is obtained by an image acquisition device (such as a camera) in a video acquisition mode or an image acquisition mode. The display unit 706 may include a display panel 7061, and the display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a functional key (such as a volume control key or a switch key), a track ball, a mouse, and a joystick. Details are not described herein again.

In the embodiments of this application, after receiving downlink data from a network side device, the radio frequency unit 701 may transmit the downlink data to the processor 710 for processing. In addition, the radio frequency unit 701 may send uplink data to the network side device. Generally, the radio frequency unit 701 includes but is not limited to an antenna, an amplifier, a transceiver, a coupler, a low noise amplifier, a duplexer, and the like.

The memory 709 may be configured to store a software program or an instruction and various data. The memory 709 may mainly include a first storage area that stores a program or an instruction and a second storage area that stores data, where the first storage area may store an operating system, an application program or an instruction required for at least one function (for example, a sound playback function, an image display function, and the like), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes but is not limited to these memories and any other memory of a suitable type.

The processor 710 may include one or more processing units. Optionally, the processor 710 integrates an application processor and a modem processor. The application processor mainly processes operations involving an operating system, a user interface, an application program, and the like. The modem processor mainly processes a wireless communication signal, for example, a baseband processor. It may be understood that, the modem processor may alternatively not be integrated in the processor 710.

In some embodiments, a central device is a terminal, and the processor 710 is configured to: send a first instruction to a client, to indicate the client to participate in model training of specific federated learning or federated meta learning; and receive a training result reported by the client, where the training result is a result or an intermediate result after the client performs a round of model training.

In some embodiments, the processor 710 is configured to: screen N clients from M candidate clients according to a preset first screening condition, and unicast the first instruction to the N clients, where M and N are positive integers, and N is less than or equal to M; or

broadcast the first instruction to M candidate clients, where the first instruction carries a second screening condition, the second screening condition is used for screening a client that reports the training result, and the client meets the second screening condition.

In some embodiments, the processor 710 is configured to receive first training data and/or a first parameter reported by each candidate client, where the first parameter may be a determining parameter of the first screening condition.

In some embodiments, the processor 710 is configured to only receive the first training data reported by each candidate client, and determines the first parameter based on the first training data.

In some embodiments, the first parameter includes at least one of the following:
a data type of the candidate client;
a data distribution parameter of the candidate client;
a service type of the candidate client, for example, enhanced mobile broadband (eMBB), ultra-reliable low-latency communications (URLLC), massive machine type communication (mMTC), and other 6G new scenarios;
a working scenario of the candidate client, including but not limited to: a high-speed, a low-speed, a line of sight LOS, a non-line of sight NLOS, a high signal-to-noise ratio, or a low signal-to-noise ratio working scenario;
a communication network access manner of the candidate client, including a mobile network, WiFi, and a fixed network, where the mobile network includes 2G, 3G, 4G, 5G, and 6G;
channel quality of the candidate client;
difficulty in collecting data of the candidate client;
a battery level state of the candidate client, for example, a specific value of an available remaining battery level, or a hierarchical description result such as charging or not charging, and the like;
a storage state of the candidate client, for example, a specific value of an available memory, or a hierarchical result;
computing power of the candidate client, for example, a number of GPUs, a number of CPUs, a number of cores, and the like, where the computing power may be expressed by using floating-point operations per second FLOPS, a processor computing unit capability (TOPS, GOPS, and/or MOPS), and the like;
a number of times that the candidate client participates in the model training of the specific federated learning or federated meta learning; and
willingness of the candidate client for participating in the model training of the specific federated learning or federated meta learning.

In some embodiments, the unicasted first instruction includes at least one of the following:
a model file;
a structure of a model;
a model initialization parameter;
an output physical quantity of the model;
an input physical quantity of the model;
a reference point corresponding to the model;
a hyperparameter of the model; and
communication information.

In some embodiments, the broadcasted first instruction includes at least one of the following:
an identifier of each candidate client that participates in training;
an identifier of each candidate client that does not participate in training;
the first screening condition;
a model file;
a structure of a model;
a model initialization parameter;
an output physical quantity of the model;
an input physical quantity of the model;
a reference point corresponding to the model;
a hyperparameter of the model; and
communication information.

In some embodiments, the processor 710 is configured to send, in a case of determining that a model reaches convergence according to the training result, a converged model and a hyperparameter to L inference clients, where L is greater than M, equal to M, or less than M.

In some embodiments, the model is a federated meta learning model, and the hyperparameter is determined by the first parameter.

In some embodiments, the hyperparameter includes at least one of the following:
a learning rate, an external iteration learning rate, an internal iteration learning rate, a meta learning rate, a number of iterations, a number of internal iterations, a number of external iterations, a data volume required for training, a size of a batch, a size of a mini batch, a regularization parameter, a number of layers of a neural network, a number of neurons in each hidden layer, a number of learning epochs, selection of a cost function, and a neuron activation function.

In some embodiments, the central device is a network side device or a terminal; and
the client is a network side device or a terminal.

In some embodiments, a client is a terminal, and the processor 710 is configured to: receive a first instruction from a central device, where the first instruction is used for indicating the client to participate in model training of specific federated learning or federated meta learning; and perform the model training of the specific federated learning or federated meta learning, and report a training result to the central device, where the training result is a result or an intermediate result after the client performs a round of model training.

In some embodiments, the processor 710 is configured to: receive the first instruction unicasted by the central device, where the client is a client screened by the central device from candidate clients according to a preset first screening condition; or
receive the first instruction broadcasted by the central device, where the first instruction carries a second screening condition, the second screening condition is used for screening a client that reports the training result, and the client meets the second screening condition.

In some embodiments, the processor 710 is configured to: perform the model training and report the training result if the client receives the first instruction unicasted by the central device; or
perform the model training and report the training result if the client receives the first instruction broadcasted by the central device.

In some embodiments, the processor 710 is configured to report first training data and/or a first parameter to the central device, where the first parameter may be a determining parameter of the first screening condition, and the first training data is used for determining the first parameter.

In some embodiments, the first parameter includes at least one of the following:
a data type of the candidate client;
a data distribution parameter of the candidate client;
a service type of the candidate client, for example, enhanced mobile broadband (eMBB), ultra-reliable low-latency communications (URLLC), massive machine type communication (mMTC), and other 6G new scenarios;
a working scenario of the candidate client, including but not limited to: a high-speed, a low-speed, a line of sight LOS, a non-line of sight NLOS, a high signal-to-noise ratio, or a low signal-to-noise ratio working scenario;
a communication network access manner of the candidate client, including a mobile network, WiFi, and a fixed network, where the mobile network includes 2G, 3G, 4G, 5G, and 6G;
channel quality of the candidate client;
difficulty in collecting data of the candidate client;
a battery level state of the candidate client, for example, a specific value of an available remaining battery level, or a hierarchical description result such as charging or not charging, and the like;
a storage state of the candidate client, for example, a specific value of an available memory, or a hierarchical result;
computing power of the candidate client, for example, a number of GPUs, a number of CPUs, a number of cores, and the like, where the computing power may be expressed by using floating-point operations per second FLOPS, a processor computing unit capability (TOPS, GOPS, and/or MOPS), and the like;
a number of times that the candidate client participates in the model training of the specific federated learning or federated meta learning; and
willingness of the candidate client for participating in the model training of the specific federated learning or federated meta learning.

In some embodiments, the unicasted first instruction includes at least one of the following:
a model file;
a structure of a model;
a model initialization parameter;
an output physical quantity of the model;
an input physical quantity of the model;
a reference point corresponding to the model;
a hyperparameter of the model; and
communication information.

In some embodiments, the broadcasted first instruction includes at least one of the following:
an identifier of each candidate client that participates in training;
an identifier of each candidate client that does not participate in training;
the first screening condition;
a model file;
a structure of a model; a model initialization parameter;
an output physical quantity of the model;
an input physical quantity of the model;
a reference point corresponding to the model;
a hyperparameter of the model; and
communication information.

In some embodiments, the processor 710 is configured to receive a converged model and a hyperparameter sent by the central device.

In some embodiments, the model is a federated meta learning model, and the hyperparameter is determined by the first parameter.

In some embodiments, the hyperparameter includes at least one of the following:

a learning rate, an external iteration learning rate, an internal iteration learning rate, a meta learning rate, a number of iterations, a number of internal iterations, a number of external iterations, a data volume required for training, a size of a batch, a size of a mini batch, a regularization parameter, a number of layers of a neural network, a number of neurons in each hidden layer, a number of learning epochs, selection of a cost function, and a neuron activation function.

In some embodiments, a first part of the hyperparameter is determined by a first parameter corresponding to the inference client, and the first part includes at least one of the following:

an external iteration learning rate, an internal iteration learning rate, a meta learning rate, a number of internal iterations, and a number of external iterations.

In some embodiments, the processor 710 is configured to perform performance verification on the model; and use the model for inference if a performance verification result meets a preset first condition.

In some embodiments, the model on which performance verification is performed is a model distributed by the central device, or a fine-tuned model of the model distributed by the central device.

In some embodiments, the central device is a network side device or a terminal; and
the client is a network side device or a terminal.

In addition, the candidate client may be a network side device or a terminal; and the inference client may be a network side device or a terminal.

When the central device and/or the client are/is a network side device, an embodiment of this application further provides a network side device, including a processor and a communication interface. The network side device embodiment corresponds to the method embodiment of the foregoing network side device. The implementation processes and implementations of the foregoing method embodiment may be applied to the network side device embodiment, and the same technical effect can be achieved.

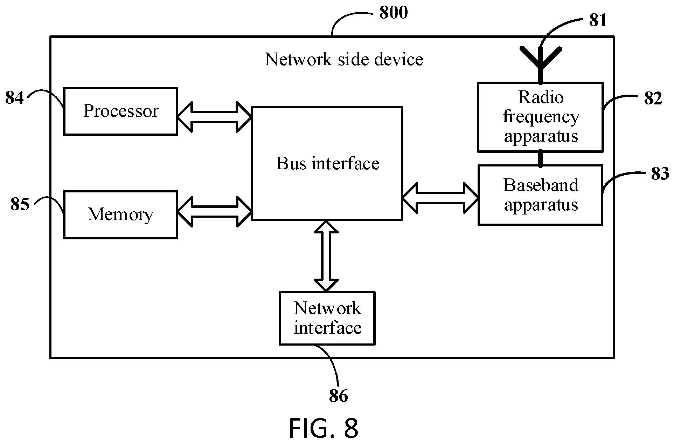

Specifically, an embodiment of this application further provides a network side device. As shown in FIG. 8, the network side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81 and sends the received information to the baseband apparatus 83 for processing. In a downlink direction, the baseband apparatus 83 processes to-be-sent information and sends the to-be-sent information to the radio frequency apparatus 82. The radio frequency apparatus 82 processes the received information and sends the information out through the antenna 81.

The method executed by the network side device in the foregoing embodiment may be implemented in the baseband apparatus 83, and the baseband apparatus 83 includes a baseband processor.

The baseband apparatus 83 may include, for example, at least one baseband board, and a plurality of chips are disposed on the baseband board. As shown in FIG. 8, one of the chips is, for example, the baseband processor, and is connected to the memory 85 through a bus interface to invoke a program in the memory 85, to perform operations of a network device shown in the foregoing method embodiment.

The network side device may further include a network interface 86, and for example, the interface is a common public radio interface (common public radio interface, CPRI).

Specifically, the network side device 800 in this embodiment of this application further includes an instruction or a program that is stored in the memory 85 and executable on the processor 84, and the processor 84 invokes the instruction or the program in the memory 85 to execute the foregoing client screening method, and achieves the same technical effect. To avoid repetition, details are not described herein again.

An embodiment of this application further provides a readable storage medium, storing a program or an instruction. When the program or the instruction is executed by a processor, the processes in the foregoing client screening method are implemented, and the same technical effect can be achieved. To avoid repetition, details are not described herein again.

The processor is a processor in the terminal described in the foregoing embodiment. The readable storage medium includes a computer-readable storage medium, such as a computer read-only memory ROM, a random access memory RAM, a magnetic disk, an optical disc, or the like.

An embodiment of this application further provides a chip, including a processor and a communication interface, where the communication interface is coupled to the processor, and the processor is configured to execute a program or an instruction to implement the processes in the client screening method embodiment, and achieve the same technical effect. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product, where the computer program/program product is stored in a storage medium, the computer program/program product is executed by at least one processor to implement the processes of the foregoing client screening method embodiment, and the same technical effect can be achieved. To avoid repetition, details are not described herein again.

An embodiment of this application further provides a client screening system, including a central device and a client, where the central device may be configured to perform the steps of the foregoing client screening method, and the client may be configured to perform the steps of the foregoing client screening method.

It should be noted that, the term "include", "comprise", or any other variant thereof in this specification is intended to cover non-exclusive inclusion, so that a process, a method, an object, or an apparatus that includes a series of elements not only includes the elements, but also includes other elements that are not expressly listed, or may further include elements that are inherent to the process, the method, the object, or the apparatus. Without more limitations, an element defined by a sentence "including one......" does not exclude existence of other same elements in the process, the method, the object, or the apparatus that includes the element. In addition, it should be noted that a scope of the method and the apparatus in the implementations of this application is not limited to performing functions according to an order that is shown or discussed, but may further include performing functions in a substantially simultaneous manner or in a reversed order according to the functions involved. For example, the described method may be performed in a different sequence than a described sequence, and various the steps may be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the existing technology may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the specific implementations described above, and the specific implementations described above are only exemplary and not limitative. A person of ordinary skill in the art may make various variations under the teaching of this application without departing from the spirit of this application and the protection scope of the claims, and such variations shall all fall within the protection scope of this application.

## Claims

1. A client screening method, comprising:
sending, by a central device, a first instruction to a client, to indicate the client to participate in model training of specific federated learning or federated meta learning; and
receiving, by the central device, a training result reported by the client, wherein the training result is a result or an intermediate result after the client performs a round of model training.

2. The client screening method according to claim 1, wherein the sending, by a central device, a first instruction to a client comprises:
screening, by the central device, N clients from M candidate clients according to a preset first screening condition, and unicasting the first instruction to the N clients, wherein M and N are positive integers, and N is less than or equal to M; or
broadcasting, by the central device, the first instruction to M candidate clients, wherein the first instruction carries a second screening condition, the second screening condition is used for screening a client that reports the training result, and the client meets the second screening condition.

3. The client screening method according to claim 2, wherein before the sending, by a central device, a first instruction to a client, the method further comprises:
receiving, by the central device, first training data and/or a first parameter reported by each candidate client, wherein the first parameter is a determining parameter of the first screening condition.

4. The client screening method according to claim 3, wherein
the central device only receives the first training data reported by each candidate client, and determines the first parameter based on the first training data.

5. The client screening method according to claim 3 or 4, wherein the first parameter comprises at least one of the following:
a data type of the candidate client;
a data distribution parameter of the candidate client;
a service type of the candidate client;
a working scenario of the candidate client;
a communication network access manner of the candidate client;
channel quality of the candidate client;
difficulty in collecting data of the candidate client;
a battery level state of the candidate client;
a storage state of the candidate client;
computing power of the candidate client;
a number of times that the candidate client participates in the model training of the specific federated learning or federated meta learning; and
willingness of the candidate client for participating in the model training of the specific federated learning or federated meta learning.

6. The client screening method according to claim 2, wherein the unicasted first instruction comprises at least one of the following:
a model file;
a structure of a model;
a model initialization parameter;
an output physical quantity of the model;
an input physical quantity of the model;
a reference point corresponding to the model;
a hyperparameter of the model; and
communication information.

7. The client screening method according to claim 2, wherein the broadcasted first instruction comprises at least one of the following:
an identifier of each candidate client that participates in training;
an identifier of each candidate client that does not participate in training;
a first screening condition;
a model file;
a structure of a model;
a model initialization parameter;
an output physical quantity of the model;
an input physical quantity of the model;
a reference point corresponding to the model;
a hyperparameter of the model; and
communication information.

8. The client screening method according to claim 3, wherein after the receiving, by the central device, a training result reported by the client, the method further comprises:
sending, by the central device in a case of determining that a model reaches convergence according to the training result, a converged model and a hyperparameter to L inference clients, wherein L is greater than M, equal to M, or less than M.

9. The client screening method according to claim 8, wherein the model is a federated meta learning model, and the hyperparameter is determined by the first parameter.

10. The client screening method according to claim 8, wherein the hyperparameter comprises at least one of the following:
a learning rate, an external iteration learning rate, an internal iteration learning rate, a meta learning rate, a number of iterations, a number of internal iterations, a number of external iterations, a data volume required for training, a size of a batch, a size of a mini batch, a regularization parameter, a number of layers of a neural network, a number of neurons in each hidden layer, a number of learning epochs, selection of a cost function, and a neuron activation function.

11. The client screening method according to claim 1, wherein
the central device is a network side device or a terminal; and
the client is a network side device or a terminal.

12. A client screening method, comprising:
receiving, by a client, a first instruction from a central device, wherein the first instruction is used for indicating the client to participate in model training of specific federated learning or federated meta learning; and
performing, by the client, the model training of the specific federated learning or federated meta learning, and reporting a training result to the central device, wherein the training result is a result or an intermediate result after the client performs a round of model training.

13. The client screening method according to claim 12, wherein the receiving, by a client, a first instruction from a central device comprises:
receiving, by the client, the first instruction unicasted by the central device, wherein the client is a client screened by the central device from candidate clients according to a preset first screening condition; or
receiving, by the client, the first instruction broadcasted by the central device, wherein the first instruction carries a second screening condition, the second screening condition is used for screening a client that reports the training result, and the client meets the second screening condition.

14. The client screening method according to claim 13, wherein the performing, by the client, the model training of the specific federated learning or federated meta learning, and reporting a training result to the central device comprises:
performing, by the client, the model training and reporting the training result if the client receives the first instruction unicasted by the central device; or
performing, by the client, the model training and reporting the training result if the client receives the first instruction broadcasted by the central device.

15. The client screening method according to claim 13, wherein before the receiving, by a client, a first instruction from a central device, the method further comprises:
reporting, by each candidate client, first training data and/or a first parameter to the central device, wherein the first parameter is a determining parameter of the first screening condition, and the first training data is used for determining the first parameter.

16. The client screening method according to claim 15, wherein the first parameter comprises at least one of the following:
a data type of the candidate client;
a data distribution parameter of the candidate client;
a service type of the candidate client;
a working scenario of the candidate client;
a communication network access manner of the candidate client;
channel quality of the candidate client;
difficulty in collecting data of the candidate client;
a battery level state of the candidate client;
a storage state of the candidate client;
computing power of the candidate client;
a number of times that the candidate client participates in the model training of the specific federated learning or federated meta learning; and
willingness of the candidate client for participating in the model training of the specific federated learning or federated meta learning.

17. The client screening method according to claim 13, wherein the unicasted first instruction comprises at least one of the following:
a model file;
a structure of a model;
a model initialization parameter;
an output physical quantity of the model;
an input physical quantity of the model;
a reference point corresponding to the model;
a hyperparameter of the model; and
communication information.

18. The client screening method according to claim 13, wherein the broadcasted first instruction comprises at least one of the following:
an identifier of each candidate client that participates in training;
an identifier of each candidate client that does not participate in training;
a first screening condition;
a model file;
a structure of a model; a model initialization parameter;
an output physical quantity of the model;
an input physical quantity of the model;
a reference point corresponding to the model;
a hyperparameter of the model; and
communication information.

19. The client screening method according to claim 15, wherein after the reporting a training result to the central device, the method further comprises:
receiving, by an inference client, a converged model and a hyperparameter sent by the central device.

20. The client screening method according to claim 19, wherein the model is a federated meta learning model, and the hyperparameter is determined by the first parameter.

21. The client screening method according to claim 19, wherein the hyperparameter comprises at least one of the following:
a learning rate, an external iteration learning rate, an internal iteration learning rate, a meta learning rate, a number of iterations, a number of internal iterations, a number of external iterations, a data volume required for training, a size of a batch, a size of a mini batch, a regularization parameter, a number of layers of a neural network, a number of neurons in each hidden layer, a number of learning epochs, selection of a cost function, and a neuron activation function.

22. The client screening method according to claim 21, wherein a first part of the hyperparameter is determined by a first parameter corresponding to the inference client, and the first part comprises at least one of the following:
an external iteration learning rate, an internal iteration learning rate, a meta learning rate, a number of internal iterations, and a number of external iterations.

23. The client screening method according to claim 19, wherein after the receiving, by an inference client, a converged model and a hyperparameter sent by the central device, the method further comprises:
performing, by the inference client, performance verification on the model; and
using, by the inference client, the model for inference if a performance verification result meets a preset first condition.

24. The client screening method according to claim 23, wherein the model on which performance verification is performed is a model distributed by the central device, or a fine-tuned model of the model distributed by the central device.

25. The client screening method according to claim 12, wherein
the central device is a network side device or a terminal; and
the client is a network side device or a terminal.

26. A client screening apparatus, comprising:
a sending module, configured to send a first instruction to a client, to indicate the client to participate in model training of specific federated learning or federated meta learning; and
a receiving module, configured to receive a training result reported by the client, wherein the training result is a result or an intermediate result after the client performs a round of model training.

27. The client screening apparatus according to claim 26, wherein
the sending module is specifically configured to: screen N clients from M candidate clients according to a preset first screening condition and unicast the first instruction to the N clients, wherein M and N are positive integers, and N is less than or equal to M; or
broadcast the first instruction to M candidate clients, wherein the first instruction carries a second screening condition, the second screening condition is used for screening a client that reports the training result, and the client meets the second screening condition.

28. A client screening apparatus, comprising:
a receiving module, configured to receive a first instruction from a central device, wherein the first instruction is used for indicating a client to participate in model training of specific federated learning or federated meta learning; and
a reporting module, configured to perform the model training of the specific federated learning or federated meta learning and report a training result to the central device, wherein the training result is a result or an intermediate result after the client performs a round of model training.

29. A client, comprising a processor and a memory, wherein the memory stores a program or an instruction that is executable on the processor, and when the program or the instruction is executed by the processor, the steps of the client screening method according to any one of claims 12 to 25 are implemented.

30. A central device, comprising a processor and a memory, wherein the memory stores a program or an instruction that is executable on the processor, and when the program or the instruction is executed by the processor, the steps of the client screening method according to any one of claims 1 to 11 are implemented.

31. A readable storage medium, storing a program or an instruction, wherein when the program or the instruction is executed by a processor, the steps of the client screening method according to any one of claims 1 to 11 are implemented, or the steps of the client screening method according to any one of claims 12 to 25 are implemented.
